# EUROPÄISCHE PATENTSCHRIFT

(11) **EP 2 892 706 B1**
(45) Veröffentlichungstag und Bekanntmachung des Hinweises auf die Patenterteilung: **09.10.2019**
(21) Anmeldenummer: 13750069.0
(22) Anmeldetag: 16.08.2013
(51) Int. Cl.: B29C 48/275, B29B 17/00, B65G 53/52, B29C 48/10, B29C 48/08

(54) **VORRICHTUNG ZUM ABSAUGEN VON ABFALLPRODUKTEN EINER PRODUKTIONSMASCHINE MIT EINEM ABSAUGELEMENT**
DEVICE FOR SUCTIONING OFF WASTE PRODUCTS FROM A PRODUCTION MACHINE, COMPRISING A SUCTION ELEMENT
DISPOSITIF POUR ASPIRER DES PRODUITS DE REBUT D'UNE MACHINE DE PRODUCTION COMPORTANT UN ÉLÉMENT D'ASPIRATION

(30) Priorität: 04.09.2012 DE 102012108198
(43) Veröffentlichungstag der Anmeldung: 15.07.2015
(73) Patentinhaber: Windmöller & Hölscher KG, 49525 Lengerich (DE)
(72) Erfinder: SEHLLEIER, Thomas, 48151 Münster (DE)
(86) Internationale Anmeldenummer: PCT/EP2013/067109
(87) Internationale Veröffentlichungsnummer: WO 2014/037207

(56) Entgegenhaltungen:
- EP-A1- 0 305 152
- WO-A1-02/064333
- WO-A1-2009/022964
- JP-A- S4 883 575
- JP-A- H07 228 305
- JP-A- 2001 031 246
- JP-U- S5 416 171
- JP-U- H01 109 018
- JP-U- S54 152 492
- US-A- 3 759 580
- US-A- 4 976 288

## Beschreibung

Die Erfindung betrifft eine Vorrichtung zum Absaugen von Abfallprodukten einer Produktionsmaschine, mit einer Saugkammer, an der mindestens ein Absaugelement angeordnet ist, das in einen außerhalb der Saugkammer sich befindenden Absaugraum sich erstreckt, um Abfallprodukte in die Saugkammer zu befördern, wobei das Absaugelement einen Einlassbereich, der dem Absaugraum zugewandt ist, und einen Auslassbereich aufweist, der in die Saugkammer mündet. Zudem betrifft die Erfindung eine Produktionsmaschine, die die soeben genannte Vorrichtung aufweist.

Die Schriften JP H07 228305 A, JP H01 109018 U, JP 2001 031246 A und JP S54 152492 U offenbaren gattungsgemäße Vorrichtungen.

Aus dem Stand der Technik sind diverse Absaugvorrichtungen bekannt, um Abfallprodukte einer Produktionsmaschine abzusaugen. Zum Beispiel kommen Absaugrohre zum Einsatz, die als Absaugelement dienen, wobei die Rohre manuell in ihrer Position eingestellt werden können, um je nach Einsatzgebiet wirkungsvoll anfallende Abfallprodukte an einer Produktionsmaschine absaugen zu können. Diese Rohre münden in einer Hauptleitung, in der ein Unterdruck durch ein Gebläse produziert wird. Nachteiligerweise ergeben sich in dieser Hauptleitung teilweise Störgeometrien. Zudem ergeben sich nachteiligerweise bei der bekannten Absaugvorrichtung ungleichmäßige Geschwindigkeits- und Druckfelder in der Hauptleitung sowie in den einzelnen Absaugelementen, welches nicht erwünscht bzw. zu vermeiden ist, da beispielweise die Gefahr besteht, dass die Absaugvorrichtung durch die Abfallprodukte verstopfen können, oder dass die anfallenden Abfallprodukte nicht zuverlässig von der Produktionsmaschine, insbesondere vom Absaugraum abgesaugt werden können.

Die Aufgabe der vorliegenden Erfindung ist es, die oben genannten Nachteile zu vermeiden, insbesondere eine Vorrichtung der genannten Art zu schaffen, die zuverlässig anfallende Abfallprodukte einer Produktionsmaschine absaugt, wobei gleichzeitig eine Verstopfungsneigung innerhalb der Absaugvorrichtung reduziert wird.

Die Aufgabe der vorliegenden Erfindung wird durch sämtliche Merkmale des Patentanspruches 1 gelöst. In den abhängigen Ansprüchen sind vorteilhafte Ausführungsformen beschrieben.

Erfindungsgemäß ist vorgesehen, dass das Absaugelement eine umlaufende Wandung aufweist, die mit einem derart gekrümmten Verlauf ausgebildet ist, dass während der Absaugung im Auslassbereich beabstandet zu der Wandung eine mittlere Unterdruckzone sich ergibt, die einen geringeren Unterdruck aufweist als der Unterdruck, der in einer äußeren Unterdruckzone zwischen der mittleren Unterdruckzone und der Wandung entsteht, wodurch die Abfallprodukte innerhalb des Absaugelements im wesentlichen mittig hindurchströmen und eine Kontaktierung der Abfallprodukte an der Wandung minimierbar ist. Durch die Ausbildung einer mittleren Unterdruckzone im Auslassbereich des Absaugelementes, der in der Saugkammer mündet, kann eine Verstopfungsneigung während der Absaugung der erfindungsgemäßen Vorrichtung reduziert werden. Überraschenderweise hat sich gezeigt, dass aufgrund der mittleren Unterdruckzone, die durch die äußere Unterdruckzone umgeben ist bzw. die zwischen den sich bildenden äußeren Unterdruckzonen sich befindet, die Abfallprodukte nahezu mittig durch das Absaugelement, insbesondere durch den die Saugkammer zugewandten Bereich des Absaugelementes hindurchströmen, ohne wesentlich die Wandung des Absaugelementes zu kontaktieren. Die äußere Unterdruckzone, die der umlaufenden Wandung zugewandt ist, kann in ihrer Höhe bzw. Größe variieren. Jedoch ist der Unterdruck der mittleren Unterdruckzone im Vergleich zum Unterdruck der äußeren Unterdruckzone geringer, was dazu führt, dass die Abfallprodukte preferierend durch die mittlere Unterdruckzone, die sich im Auslassbereich des Absaugelementes einstellt, hindurchströmen.

Zudem ist es vorgesehen, dass die Wandung des Absaugelements eine innere Wandung und eine äußere Wandung aufweist, wobei die innere Wandung im wesentlichen tangential am Auslassbereich an der Saugkammer endet. Ein Vorteil der tangentialverlaufenden inneren Wandung ist, dass ein extremes Unterdruckgebiet bzw. eine Unterdruckzone an einer Wandung im Auslassbereich bzw. kurz vor der Mündung in die Saugkammer vermieden wird, wodurch eine Verstopfungsneigung erhöht wäre.

Eine die Erfindung verbessernde Maßnahme kann vorsehen, dass die innere Wandung einen Verlauf eines Kreissegmentes aufweist, der insbesondere einen definierten Radius aufweist. Die Geometrie der inneren Wandung begünstigt den gekrümmten Verlauf des Absaugelementes, wodurch vorteilhafte Strömungseffekte für die Abfallprodukte innerhalb des Absaugelementes entstehen.

Es weist die äußere Wandung ein Mittel auf, das einen Strömungswiderstand innerhalb des Absaugelementes erhöht, wodurch am Auslassbereich der Unterdruck der äußeren Unterdruckzone im Bereich der inneren Wandung reduzierbar ist. Es hat sich gezeigt, dass im Bereich der inneren Wandung eine größere Verstopfungsneigung vorliegen kann, wodurch über einen Einsatz eines Strömungswiderstandes an der äußeren Wandung strömungstechnisch entgegengewirkt werden kann, sodass der Wert des Unterdruckes der äußeren Unterdruckzone im Bereich der inneren Wandung wesentlich reduziert werden kann. Diesen Effekt ausnutzend haben Versuche ergeben, dass die Abfallprodukte nahezu durch die mittlere Unterdruckzone hindurchströmen, ohne dass eine schädliche Kontaktierung der Abfallprodukte an den Wandungen, insbesondere an der inneren Wandung des Absaugelementes entsteht.

Durch die erfindungsgemäße Ausgestaltung des Absaugelementes mit seiner inneren und seiner äußeren Wandung ergibt sich während des Betriebs bzw. während der Absaugung der Abfallprodukte, die in der Produktionsmaschine anfallen, im Auslassbereich die mittlere Unterdruckzone, die durch die äußere Unterdruckzone umfasst ist.

Hinsichtlich des Mittels, dass den Strömungswiderstand innerhalb des Absaugelementes erhöht, ist es denkbar, dass das genannte Mittel an der dem Auslassbereich zugewandten Seite der äußeren Wandung vorgesehen ist. Beispielsweise können mehrere Mittel an der äußeren Wandung vorgesehen sein, bzw. die äußere Wandung kann mit einem oder mehreren Mitteln ausgeführt sein, um den Strömungswiderstand innerhalb des Absaugelementes zu erhöhen, wodurch am Auslassbereich der Unterdruck der äußeren Unterdruckzone im Bereich der inneren Wandung erniedrigbar ist.

Erfindungsgemäß ragt das Mittel derart ins Innere des Absaugelementes hinein, dass der Querschnitt des Absaugelementes zwischen dem Einlassbereich und dem Auslassbereich sich verjüngt, wobei insbesondere ausgehend vom verjüngten Bereich zum Auslassbereich der Querschnitt sich wieder vergrößert. Beispielsweise kann vorgesehen sein, dass das Mittel als eine Blende ausgeführt ist, die innerhalb des Absaugelementes, bzw. an der äußeren Wandung sich befindet. Zusätzlich kann vorgesehen sein, dass mehrere Blenden innerhalb des Absaugelementes vorgesehen sind, die einen definierten Abstand zueinander aufweisen. Durch den Einsatz einer oder mehrerer Blenden kann wirkungsvoll der Unterdruck an der inneren Wandung im Auslassbereich des Absaugelementes reduziert werden, wodurch eine vorteilhafte Ablenkung der Abfallprodukte durch die mittlere Unterdruckzone, die sich zwischen den Wandungen ergibt, sich ergibt.

Ebenfalls ist das Mittel, das zur Erhöhung des Strömungswiderstandes innerhalb des Absaugelementes zum Einsatz kommt, als Wand ausgeführt ist, die schräg zum Einlassbereich geneigt ist. Vorteilhafterweise kann das Mittel als eine plane Wand ausgeführt sein, die eine ebene Fläche aufweist. Alternativ kann das Mittel als eine zum Innenbereich des Absaugelementes gewölbte Wand ausgeführt sein. Die Neigung der planen Wand oder der gewölbten Wand zum Einlassbereich kann einen Winkel α aufweisen, der im Bereich zwischen 20°≤ α ≤70° liegt. Besonders vorteilhaft ist, wenn die Neigung α zwischen 30°≤ α ≤50° liegt. Aus Versuchsergebnissen haben sich die genannten Neigungswinkel α als besonders vorteilhaft ergeben, um einen zuverlässigen Abtransport der Abfallprodukte aus dem Absaugraum in die Saugkammer zu gewährleisten.

Zudem kann die Erfindung mitumfassen, dass der Einlassbereich und/oder der Auslassbereich des Absaugelementes einen runden Querschnitt und/oder einen rechteckigen und/oder einen quadratischen Querschnitt aufweist. Vorteilhafterweise hat sich gezeigt, dass das Absaugelement zwischen dem Einlassbereich und dem Auslassbereich mit einem Rohr ausgebildet ist, wobei insbesondere das Rohr einen runden Querschnitt und/oder einen rechteckigen und/oder einen quadratischen Querschnitt aufweist. Die erwähnten Querschnittsformen haben den Vorteil, dass im Inneren keine Verdrehungen der hineinströmenden Abfallprodukte auftreten. Dieses hat zur Folge, dass die Abfallprodukte im Wesentlichen während des Absaugens in der Mitte bzw. in der mittleren Unterdruckzone des Absaugelementes gehalten werden und verhindert wird, dass die Abfallprodukte an der Innenwandung innerhalb des Absaugelementes sich anlegen und möglicherweise dort verbleiben, was mit einer schädlichen Verstopfung verbunden wäre. Vorteilhafterweise verbindet das Rohr den Einlassbereich mit dem Auslassbereich, wobei das Rohr unterschiedliche geometrische Formen und/oder Erstreckungen aufweisen kann, wie z. B. eine gerade, stetig oder unstetig gekrümmte, stetig oder unstetig gebogene, gestufte Erstreckung. Die genannten Formen/Erstreckungen sind miteinander kombinierbar, z. B. dass das Rohr teilweise eine gerade und eine gebogene Erstreckung hat.

In einer weiteren vorteilhaften Ausführungsform der Erfindung kann das Absaugelement ein Biegeteil aus Metall sein, wobei insbesondere das Biegeteil aus vier Metallstreifenelementen ausgebildet ist, die miteinander befestigt sind. Die vier Metallstreifenelemente können miteinander vorteilhafterweise stoffschlüssig verbunden sein. Beispielsweise ist eine Laserschweißverbindung vorteilhaft, da diese Verbindung eine zuverlässige Dichtheit verursacht.

Zudem kann die Erfindung mitumfassen, dass ein Abdichtmittel an der Saugkammer angeordnet ist und die Saugkammer verschließt, wobei insbesondere das Absaugelement mit seinem Auslassbereich durch das Abdichtmittel sich erstreckt. Vorteilhafterweise ist das Abdichtmittel luftdicht, sodass die Saugleistung der Absaugvorrichtung nicht negativ gestört oder beeinflusst wird. Zudem kann es vorteilhaft sein, dass das Abdichtmittel eine Öffnung für das Absaugelement aufweist, sodass zumindest teilweise das Absaugelement sich durch die Öffnung des Abdichtmittels erstreckt. Im Bereich der Öffnung ist vorteilhafterweise das Abdichtmittel am Absaugelement kontaktiert, sodass auch an dieser Stelle eine Abdichtung vorliegt.

Ebenfalls kann die erfindungsgemäße Erfindung umfassen, dass das Absaugelement entlang des Abdichtmittels bewegbar ist, wodurch die Position des Absaugelements an der Saugkammer variabel einstellbar ist. Besonders vorteilhaft ist, dass das Absaugelement variabel an der Saugkammer in seiner Position bewegt und verstellt werden kann, um flexibel in unterschiedlichen Produktionsmaschinen eingesetzt zu werden. Das bedeutet, dass die Position des Absaugelementes entsprechend des Ortes, wo Abfallprodukte der Produktionsmaschine anfallen können, positioniert werden kann. Gleichzeitig sorgt das Abdichtmittel dafür, dass unabhängig von der Position des Absaugelementes eine zuverlässige Abdichtung der Saugkammer gewährleistet ist, sodass die Saugleistung der Absaugvorrichtung nicht durch die Position des Absaugelementes negativ gestört oder beeinflusst wird. Dadurch können Verstopfungen innerhalb der Saugkammer wirkungsvoll vermieden werden, da insbesondere unabhängig von der Position des Absaugelementes das Abdichtelement eine Abdichtung der Saugkammer gewährleistet.

Damit das Absaugelement individuell in seiner Position relativ zur Saugkammer eingestellt werden kann, kann die Saugkammer eine Lagerung aufweisen, an der das Absaugelement bewegbar gelagert ist. Zum Beispiel ist es denkbar, dass die Lagerung als Schienensystem ausgeführt ist. Beispielsweise kann es in einer Ausführungsform der Erfindung denkbar sein, dass das Absaugelement linear entlang der Saugkammer verschoben werden kann.

Eine die Erfindung verbessernde Maßnahme kann vorsehen, dass das Absaugelement entlang des Abdichtmittels verschiebbar ist, wobei während der Bewegung des Absaugelementes die Position der Öffnung des Abdichtmittels sich mitbewegt. Das bedeutet, dass bei einer Bewegung des Absaugelementes Bereiche des Abdichtmittels, die zuvor verschlossen sind, sich öffnen und somit eine entsprechende Öffnung für das Absaugelement bieten. Gleichzeitig verschließt sich die Öffnung des Abdichtmittels, durch die zuvor das Absaugelement hindurch ragte.

In einer weiteren vorteilhaften Ausführungsform der Erfindung weist die Saugkammer einen sich verjüngenden Verlauf in ihrem Querschnitt auf, wobei der Querschnitt der Saugkammer an der der Saugeinheit zugewandten Seite größer ist als der Querschnitt an der der Saugeinheit abgewandten Seite. Diese Ausführungsform kann insbesondere dann vorteilhaft sein, wenn mehrere Absaugelemente an der Saugkammer angeordnet sind. Hierdurch wird erzielt, dass in der Saugkammer eine gleichmäßige Strömung während des Betriebes der erfindungsgemäßen Vorrichtung erzeugt wird. In diesem Zusammenhang hat sich gezeigt, dass eine konische Ausgestaltung der Saugkammer vorteilhaft ist. Diese konische Geometrie verhindert, dass die Strömungsgeschwindigkeit zwischen den einzelnen Absaugelementen extrem absinkt. Des Weiteren wird wirkungsvoll verhindert, dass sich störende Strömungswirbel in der Saugkammer sowie in den Absaugelementen bilden.

Ferner kann die erfindungsgemäße Vorrichtung derart weitergebildet sein, dass das Absaugelement einen Fuß aufweist, der unterhalb des Abdichtmittels angeordnet ist. Das Absaugelement befindet sich im Wesentlichen außerhalb der Saugkammer und der Fuß ist unterhalb des Abdichtmittels innerhalb der Saugkammer angeordnet, wobei insbesondere der Fuß plan ausgebildet sein kann und innenseitig der Saugkammer am Abdichtmittel anliegt. Der Fuß sowie der Auslassbereich des Absaugelementes können miteinander form- und/oder kraft- und/oder stoffschlüssig verbunden sein. Beispielsweise ist es denkbar, dass der Auslassbereich des Absaugelementes mit dem Fuß verschweißt oder verschraubt ist. Der Fuß kann als Platte ausgebildet sein, wobei gleichzeitig der Fuß eine gewisse Abdichtfunktion aufweisen kann, da er sich unterhalb oder oberhalb des Abdichtmittels befindet und gerade an der Stelle der Öffnung, durch die das Absaugelement in die Saugkammer sich erstreckt, zusätzlich dafür sorgt, dass die Saugkammer von der Umgebung abgedichtet ist. Der Fuß kann auch als Führungshilfe für das Absaugelement dienen, wenn das Absaugelement verschiebbar entlang der Saugkammer gelagert ist.

Alternativ ist es denkbar, dass das Absaugelement starr, unbeweglich an der Saugkammer angeordnet ist. Bei dieser Ausführungsform ist der Einsatz eines Abdichtmittels nicht unbedingt erforderlich.

In Abhängigkeit von der Produktionsmaschine kann es vorteilhaft sein, dass eine Vielzahl an Absaugelemente an der Saugkammer angeordnet sind. Vorteilhafterweise kann das Absaugelement demontierbar an der Saugkammer befestigt sein, welches den Vorteil hat, dass bei Wartungsarbeiten das Absaugelement ohne große Montagezeiten von der Saugkammer losgelöst und demontiert werden kann.

Bei der Produktionsmaschine kann es sich um eine Maschine zur Herstellung von flexiblen Verpackungen handeln. Denkbar ist, dass die Produktionsmaschine eines der folgenden Maschinen ist: Blas- und Gießfolienanlage, Flexo- und Tiefdruckmaschine, Maschine für die Veredelung und Verarbeitung von Papier, Folien und Kunststoffgeweben, Verpackungsmaschine. In derartigen Produktionsmaschinen kommt es in der Regel vor, dass die herzustellenden flexiblen Verpackungen über Schneideeinrichtungen beschnitten werden müssen. Hier entstehen Abfallprodukte, die durch die erfindungsgemäße Vorrichtung absaugbar sind. Es hat sich gezeigt, dass die erfindungsgemäße Vorrichtung sich besonders bei Maschinen eignet, die Folien herstellen. Die erfindungsgemäße Absaugvorrichtung ist in der Lage, die Produktionsrückstände (=Abfallprodukte) wirkungsvoll von der produzierenden Maschine zu entfernen. Die Abfallprodukte können vorteilhafterweise fortlaufend zu einer Abfallsammelstelle befördert werden. Da die Abfallprodukte in ihrer Oberflächenbeschaffenheit variieren können, insbesondere klebrig oder stumpf oder glatt sein können, ist es erforderlich, dass eine optimale Strömung innerhalb der Saugkammer sowie innerhalb der Absaugelemente durch die erfindungsgemäße Vorrichtung erzielt wird. Dieses wird durch die oben bereits beschriebenen Maßnahmen erreicht, sodass eine zuverlässige Absaugung des Absaugraumes erzielt wird, ohne dass die Abfallprodukte innerhalb der Saugkammer oder in den Absaugelementen eine Verstopfung verursachen.

Vorteilhafterweise weisen die Abfallprodukte streifenartig und/oder länglich und/oder schmale Erstreckungen auf, wobei die Abfallprodukte aus Kunststoff und/oder aus Papier und/oder aus einer Folie ausführt sind. Bei den Abfallprodukten kann es sich auch um Endlosstreifen handeln, die in der Produktionsmaschine anfallen.

Zudem wird die oben genannte Aufgabe der Erfindung durch eine Produktionsmaschine mit einer Vorrichtung zum Absaugen von Abfallprodukten gelöst, wobei die Vorrichtung folgende Merkmale aufweist:
- eine Saugkammer, an der mindestens ein Absaugelement angeordnet ist, das in einen außerhalb der Saugkammer sich befindenden Absaugraum sich erstreckt, um Abfallprodukte in die Saugkammer zu befördern,
- wobei das Absaugelement einen Einlassbereich, der dem Absaugraum zugewandt ist, und einen Auslassbereich aufweist, der in die Saugkammer mündet.

Erfindungsgemäß weist das Absaugelement eine umlaufende Wandung auf, die mit einem derart gekrümmten Verlauf ausgebildet ist, dass während der Absaugung im Auslassbereich beabstandet zu der Wandung eine mittlere Unterdruckzone sich ergibt, die einen geringeren Unterdruck aufweist als der Unterdruck, der in einer äußeren Unterdruckzone zwischen der mittleren Unterdruckzone und der Wandung entsteht, wodurch die Abfallprodukte innerhalb des Absaugelements im wesentlichen mittig hindurchströmen und eine Kontaktierung der Abfallprodukte an der Wandung minimierbar ist. Auch hier ergeben sich die Vorteile, die bereits für die erfindungsgemäße Vorrichtung beschrieben sind.

Es hat sich gezeigt, dass die Integration der erfindungsgemäßen Vorrichtung in eine bestehende Produktionsmaschine sehr wichtig ist, wobei die Position der Absaugvorrichtung so zu wählen ist, dass keine anderen Bedienelemente gestört oder verdeckt werden. Zudem muss sichergestellt werden, dass eine zuverlässige Absaugung der Abfallprodukte, die in der Produktionsmaschine anfallen, gewährleistet ist. Hierzu kann ein Positionierungsantrieb vorgesehen sein, der eine horizontale und/oder vertikale Positionsverschiebung der erfindungsgemäßen Absaugvorrichtung an der Produktionsmaschine ermöglicht.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine rein schematische Darstellung einer Produktionsmaschine mit einer Absaugvorrichtung,
- Fig. 2: eine mögliche Ausführungsform einer Absaugvorrichtung, die gemäß Figur 1 einsetzbar ist,
- Fig. 3: eine Seitenansicht eines Absaugelementes der Absaugvorrichtung gemäß Figur 1,
- Fig. 4: eine weitere Ausführungsform eines Absaugelementes gemäß Figur 1,
- Fig. 5: ein weiteres Ausführungsbeispiel eines Absaugelementes gemäß Figur 1,
- Fig. 6: eine weitere Alternative eines Absaugelementes gemäß Figur 1,
- Fig. 7: ein weiteres Ausführungsbeispiel eines möglichen Absaugelementes gemäß Figur 1,
- Fig. 8: ein noch weiteres Ausführungsbeispiel eines Absaugelementes gemäß Figur 1,
- Fig. 9: ein noch weiteres Ausführungsbeispiel eines möglichen Absaugelementes gemäß Figur 1,
- Fig. 10: eine weitere Ausführungsform eines Absaugelementes gemäß Figur 1 und
- Fig. 11: eine weitere Ausführungsform eines möglichen Absaugelementes gemäß Figur 1.

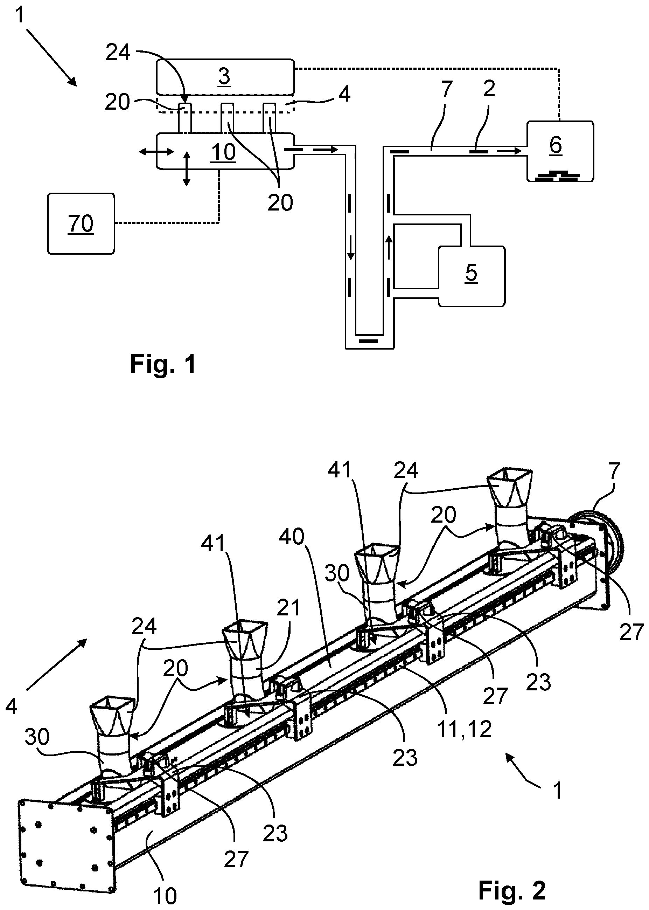

Figur 1 zeigt eine Vorrichtung 1 zum Absaugen von Abfallprodukten 2 einer Produktionsmaschine 3. Die Produktionsmaschine 3 kann eine Maschine zur Herstellung von flexiblen Verpackungen sein, in der während der Produktion Abfallprodukte 2 anfallen, die aus der Produktionsmaschine 3 zu entfernen sind, da sonst etwaige Störungen während der Produktion bzw. während des Betriebes der Produktionsmaschine 3 entstehen könnten. Bei der Produktionsmaschine 3 kann es sich um eine Blas- und Gießfolienanlage, Flexo- und Tiefdruckmaschine um eine Maschine für die Veredelung, und Verarbeitung von Papier, Folien und Kunststoffgeweben oder um eine Verpackungsmaschine handeln. Die Abfallprodukte 2 können aus Kunststoff oder Papier bestehen. Hierbei kann die Oberflächenbeschaffenheit dieser Abfallstoffe 2 variieren. Beispielsweise ist es denkbar, dass die Abfallprodukte 2 klebrig und/oder stumpf und/oder glatt sind.

Um diese Abfallprodukte 2 zielgerichtet aus dem Bereich der Produktionsmaschine 3 abzuführen, ist eine Vorrichtung 1 zum Absaugen dieser Abfallprodukte 2 vorgesehen, die mit einer Vielzahl an Absaugelementen 20 in einen Absaugraum 4 der Produktionsmaschine 3 hineinragt. Es ist eine Saugeinheit 5 vorgesehen, die einen Unterdruck innerhalb einer Saugkammer 10 entstehen lässt, die mit den Saugelementen 20 strömungstechnisch verbunden ist. Aufgrund des entstehenden Unterdrucks in der Saugkammer 10 können wirkungsvoll anfallende Abfallprodukte 2 im Absaugraum 4 abgesaugt werden. Die Saugkammer 10 ist mit einem Rohrsystem 7 verbunden, dass mit dem Gebläse 5 kommuniziert. Zudem ist ein Auffangbehältnis 6 vorgesehen, in dem die Abfallprodukte 2 aufgefangen werden. Beispielsweise ist es denkbar, die im Auffangbehältnis 6 aufgefangenen Abfallprodukte 2 automatisch dem Produktionsprozess der Produktionsmaschine 3 zurückzuführen, welches schematisch mit einem gestrichelten Pfeil gemäß Figur 1 angedeutet ist.

Zudem kann optional ein Positionierungsantrieb 70 vorgesehen sein, der in mechanischer Wirkverbindung mit der Vorrichtung 1 steht, insbesondere mit der Saugkammer 10, um eine optimale Position an der Produktionsmaschine 3 zu erzielen. Der Positionierungsantrieb 70 ist in der Lage, die Vorrichtung 1 horizontal und/oder vertikal an der Produktionsmaschine 3 auszurichten und die einzelnen Absaugelemente 20 an die gewünschte Position zu schieben.

Die erfindungsgemäße Vorrichtung 1 bietet die Möglichkeit, eine Vielzahl an Absaugelementen 20 an der Saugkammer 10 anzuordnen, um individuell für jede mögliche Produktionsmaschine 3 eine optimale Absaugung der anfallenden Abfallprodukte 2 zu erzielen.

Gemäß Figur 1 sind beispielhaft drei Absaugelemente 20 gezeigt, die unbeweglich an der Saugkammer 10 angeordnet sind. Ebenfalls ist es denkbar, dass die Absaugelemente 20 entlang der Saugkammer 10 verschiebbar sind, welches in Figur 2 gezeigt ist. Hierbei weist das Absaugelement 20 einen Wagen 23 auf, der an einer Lagerung 11 angreift. Die Lagerung 11 ist als Schienensystem 12 ausgeführt, das außerhalb der Saugkammer 10 angeordnet ist.

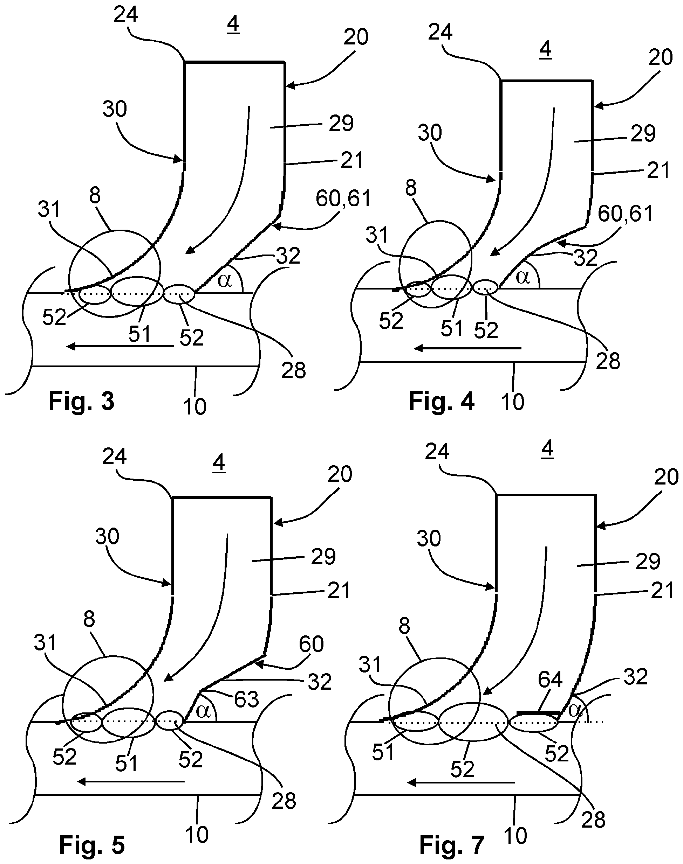

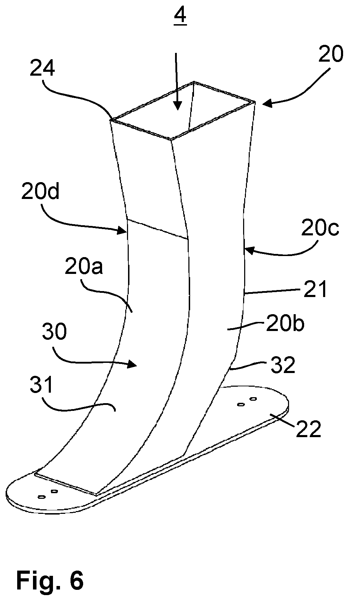

Die Absaugelemente 20 gemäß Figur 1 und Figur 2 können unterschiedliche Geometrien aufweisen, die beispielhaft in Figur 3 bis Figur 11 gezeigt sind, worauf im Folgenden noch eingegangen wird. In sämtlichen Ausführungsbeispielen weist das Absaugelement 20 einen gekrümmten Verlauf auf, der in Figur 1 aus Vereinfachungsgründen nicht visualisiert ist.

Gemäß sämtlicher Ausführungsbeispiele weist das Absaugelement 20 ein gekrümmtes Rohr 21 auf, wobei das Absaugelement 20 einen Einlassbereich 24, der in den Absaugraum 4 hineinragt, und einen Auslassbereich 28 umfasst, der in Richtung Saugkammer 10 gerichtet ist und dort mündet, wobei der Auslassbereich 28 tangential zur Saugkammer 10 gerichtet ist.

In sämtlichen Ausführungsbeispielen weist das Absaugelement 20 eine umlaufende Wandung 30 auf, die derart einen gekrümmten Verlauf aufweist, dass während der Absaugung im Auslassbereich 28 beabstandet zu der Wandung 30 eine mittlere Unterdruckzone 51 sich ergibt, die einen geringeren Unterdruck aufweist, als der Unterdruck, der in einer äußeren Unterdruckzone 52 zwischen der mittleren Unterdruckzone 51 und der Wandung 30 entsteht. Hierdurch wird erreicht, dass die Abfallprodukte 2 innerhalb des Absaugelementes 20 im Wesentlichen mittig hindurchströmen und eine Kontaktierung der Abfallprodukte 2 an der Wandung 30 reduzierbar ist.

Die Wandung 30 des Absaugelementes 20 weist gemäß sämtlicher Ausführungsbeispiele eine innere Wandung 31 und eine äußere Wandung 32 auf, wobei die innere Wandung 31 im Wesentlichen tangential am Auslassbereich 28 an der Saugkammer 10 endet. Hierbei weist die innere Wandung 31 einen Verlauf eines Kreissegmentes auf, der einen definierten Radius hat. Die äußere Wandung 32, die der inneren Wandung 31 gegenüberliegt, weist ein Mittel 60 auf, das einen Strömungswiderstand innerhalb des Absaugelementes 20 während des Absaugvorganges erhöht. Es hat sich gezeigt, dass hierdurch am Auslassbereich 28 der Unterdruck der äußeren Unterdruckzone 52 im Bereich der inneren Wandung 31 reduzierbar ist. Dieser Bereich ist mit dem Bezugszeichen 8 versehen. Es stellt sich somit eine mittlere Unterdruckzone 51 ein, die am Auslassbereich 28 durch die äußere Unterdruckzone 52 umfasst bzw. umgeben ist. Das Mittel 60 zur Strömungswiderstandserhöhung ragt derart ins Innere des Absaugelementes 20 gemäß aller Ausführungsbeispiele hinein, dass der Querschnitt des Absaugelementes 20 zwischen dem Einlassbereich 24 und dem Auslassbereich 28 sich verjüngt. Ausgehend vom verjüngten Bereich vergrößert sich zum Auslassbereich 28 hin wieder der Querschnitt des Absaugelementes 20.

Gemäß Figur 3 bis Figur 5 ist das Mittel 60 als Wand 61, 62 ausgeführt. In Figur 3 ist das Mittel 60 eine plane Wand 61, die eine Neigung α zum Auslassbereich 28 aufweist. Der Winkel α liegt im dargestellten Ausführungsbeispiel vorteilhafterweise zwischen 30° und 50°. Entsprechend den Erfordernissen bzgl. der Raumgegebenheiten in der Produktionsmaschine 3 kann der Neigungswinkel noch weiter variieren.

Gemäß Figur 4 ist das Mittel 60 als gewölbte Wand 62 ausgebildet, die in den Innenbereich 29 des Absaugelementes 20 hineinragt. Diese ballige Ausgestaltung der Wand 62 begünstigt ebenfalls wie auch die Mittel 60 gemäß Figur 3 und Figur 5, dass eine Reduzierung des Unterdruckes im Bereich 8 erfolgt, sodass eine äußere Unterdruckzone 52 während des Absaugens sich einstellt, die größer ist als die mittlere Unterdruckzone 51, wodurch die Abfallprodukte 2 im Wesentlichen mittig durch das Absaugelement 20, insbesondere durch die mittlere Unterdruckzone 51 hindurchströmen und zuverlässig in die Saugkammer 10 gelangen.

Gemäß Figur 5 ist das Mittel 60 an der äußeren Wandung 32 im Bereich 63 gekantet, wodurch ein ähnlicher Strömungseffekt innerhalb des Absaugelementes 20 erzielt wird, welcher bereits bzgl. Figur 3 und Figur 4 beschrieben worden ist.

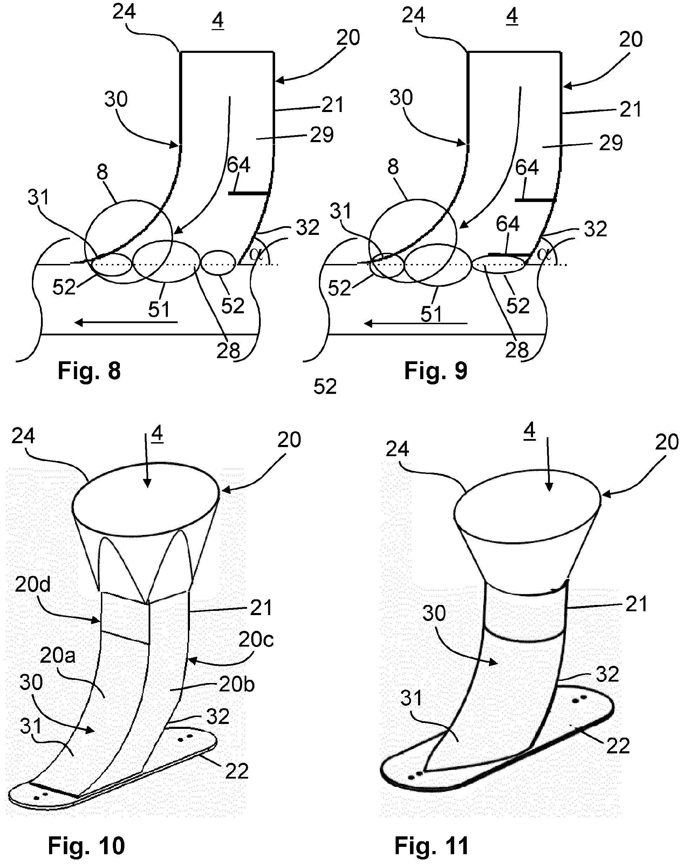

Gemäß Figur 7 bis Figur 9 weist das Absaugelement 20 eine bzw. mehrere Blenden 64 auf, die an der äußeren Wandung 32 angeordnet sind und in den Innenbereichen 29 des Absaugelementes 20 hineinragen. Diese Blenden 64 bewirken einen ähnlichen Effekt in strömungstechnischer Sicht, der auch in Figur 3 bis Figur 5 bereits beschrieben worden ist. Die Blenden 64 erhöhen den Strömungswiderstand innerhalb des Absaugelementes 20, wodurch im Bereich 8 der Unterdruck an der äußeren Unterdruckzone 52 im Bereich der inneren Wandung 31 reduzierbar ist. Auch hier stellt sich die bereits beschriebene mittlere Unterdruckzone 51 ein, die durch die äußere Unterdruckzone 52 umgeben ist, wobei die mittlere Unterdruckzone 51 einen geringeren Unterdruck aufweist als der Unterdruck, der in der äußeren Unterdruckzone 52 vorliegt. Dieses gilt selbstverständlich nur während des Absaugvorganges. Gemäß Figur 7 befindet sich die Blende 64 nahe des Auslassbereiches 28 des Absaugelementes 20. Gemäß Figur 8 weist die Blende 64 einen definierten Abstand zur Mündung des Absaugelementes 20 in die Saugkammer 10 auf. Gemäß Figur 9 sind zwei zueinander beabstandete Blende 64 an der äußeren Wandung 32 angeordnet. Die Position der oberen Blende 64 entspricht im Wesentlichen der Position der Blende aus Figur 8. Die Position der unteren Blende 64 entspricht im Wesentlichen der Position der Blende gemäß Figur 7.

Der Einlassbereich 24 sowie der Auslassbereich 28 können im Querschnitt unterschiedliche Geometrien aufweisen. Beispielsweise ist es denkbar, dass gemäß Figur 10 und Figur 11 der Einlassbereich 24 trichterförmig ausgebildet ist, das bedeutet, dass der Einlassbereich 24 einen zum Absaugraum 4 erweiternden Querschnitt aufweist. Hierbei kann der Querschnitt rund, oval, rechteckig oder quadratisch sein, wobei in diesem Zusammenhang auf die Figur 2, Figur 10 und Figur 11 besonders Bezug genommen wird. Zwischen dem Einlassbereich 24 und dem Auslassbereich 28 kann ein Rohr 21 am Absaugelement 20 ausgebildet sein, dass einen runden Querschnitt aufweisen kann, der beispielsweise in Figur 2 bis Figur 5 sowie in Figur 11 gezeigt ist. Dieser Querschnitt bezieht sich jedoch nicht auf den Bereich, wo das Mittel 60 zur Strömungswiderstandserhöhung angeordnet ist. Das Rohr 21 kann in seinem Querschnitt auch rechteckig oder quadratisch ausgebildet sein, welches in Figur 10 gezeigt ist. Das Absaugelement 20 gemäß Figur 10 ist hierbei ein Biegeteil aus Metall, wobei das Biegeteil aus vier einzelnen Metallstreifenelementen 20a, 20b, 20c, 20d ausgebildet ist, die miteinander verschweißt sind. Vor der Verschweißung kann ein entsprechender Stanzvorgang erfolgen, wobei die einzelnen Metallstreifenelemente 20a, 20b, 20c, 20d in die entsprechende Form gebogen wurden bevor die Verschweißung folgt.

Gemäß Figur 10 und Figur 11 ist ersichtlich, dass das Absaugelement 20 einen Fuß 22 aufweist. Damit eine Absaugung gewährleistet ist, weist der Fuß 20 im Bereich des Auslassbereiches 28 eine entsprechende Öffnung auf, damit die Abfallprodukte 2 aus dem Absaugraum 4 durch das Absaugelement in die Saugkammer 10 gelangen können. Der Fuß 22 kann beispielsweise als Befestigungsmittel dienen, das Absaugelement 20 entsprechend an der Saugkammer 10 zu befestigten.

Gemäß Figur 2 ist ein Abdichtmittel 40 vorgesehen, welche im Wesentlichen die Saugkammer 10 vom Außenbereich verschließt. Das Abdichtmittel 40 ist aufgrund der Verschiebbarkeit der Absaugelemente 20 von Vorteil. Beispielsweise kann der Fuß 22 aus Figur 10 und Figur 11 zusätzlich gemäß Figur 2 als Führungshilfe bei der Bewegung des Abdichtmittels 40 entlang der Saugkammer 10 dienen. Vorteilhafterweise befindet sich der Fuß 22 unterhalb des Abdichtmittels 40. Das Abdichtmittel 40 weist lediglich im Bereich des jeweiligen Absaugelementes 20 eine Öffnung 41 auf, sodass zumindest teilweise das Absaugelement 20 sich durch die Öffnung 41 des Abdichtmittels 40 erstreckt. Bedienerfreundlich lässt sich jedes Absaugelement 20 entlang des Abdichtmittels 40 verschieben, wobei während der Bewegung des Absaugelementes 20 die Position der Öffnung 41 des Abdichtmittels 40 sich mitbewegt. Hierbei sind unterschiedliche Ausführungsformen des Abdichtmittels 40 denkbar, worauf im Einzelnen jedoch nicht eingegangen wird. Das Abdichtmittel 40 kann z. B. einen Reisverschluss, einen Klettverschluss, Magnetbänder, Klappsegmente, Zippverschluss oder eine Rollodichtung aufweisen, die während der Bewegung des Absaugelementes 20 eine gleichzeitige Öffnung und Schließung des Abdichtmittels 40 bewirkt.

Die Saugkammer 10 kann einen runden Querschnitt oder einen rechteckigen Querschnitt aufweisen, der in Figur 2 gezeigt ist. Damit sich ein zufriedenstellender Unterdruck während des Betriebes innerhalb der Saugkammer 10 einstellt, weist die Saugkammer 10 einen sich verjüngenden Verlauf in ihrem Querschnitt auf, der in diesem Zusammenhang auch als konisch bezeichnet werden kann. Der Querschnitt der Saugkammer 10 an der der Saugeinheit 5 zugewandten Seite ist größer als der Querschnitt an der der Saugeinheit 5 abgewandten Seite. Hierdurch wird bezweckt, dass nahezu sämtliche Absaugelemente 20, die in Reihe geschaltet sind, die gleiche "Saugleistung" aufweisen.

Der Wagen 23 gemäß Figur 2 weist einen Handgriff 27 auf, sodass manuell die Position des Absaugelementes 20 im Absaugraum 4 einstellbar ist. Die Position des Wagens 23 kann über eine nicht explizit dargestellte Arretiervorrichtung arretiert werden. Ebenfalls kann vorgesehen sein, dass ein Antrieb, der explizit nicht gezeigt ist, die Position des Wagens 23 automatisch einstellt.

An dieser Stelle sei erwähnt, dass die schematisch gezeigten Unterdruckzonen 51, 52 in ihrer Größe und/oder Form variieren können.

Ebenfalls ist hinsichtlich der Wandung 30 hinzuzufügen, dass die innere Wandung 31 und die äußere Wandung 32 einstückig, materialeinheitlich und/oder ein monolithisches Bauteil bilden können.

### Bezugszeichenliste

- 1: Vorrichtung
- 2: Abfallprodukt
- 3: Produktionsmaschine
- 4: Absaugraum
- 5: Saugeinheit
- 6: Auffangbehälter
- 7: Rohrsystem
- 8: Bereich

- 10: Saugkammer
- 11: Lagerung
- 12: Schienenelement

- 20: Absaugelement
- 20a: Metallstreifenelement
- 20b: Metallstreifenelement
- 20c: Metallstreifenelement
- 20d: Metallstreifenelement
- 21: Rohr
- 22: Fuß
- 23: Wagen
- 24: Einlassbereich

- 27: Handgriff
- 28: Auslassbereich
- 29: Innenbereich
- 30: Wandung
- 31: innere Wandung
- 32: äußere Wandung
- 40: Abdichtmittel
- 41: Öffnung

- 51: mittlere Unterdruckzone
- 52: äußere Unterdruckzone

- 60: Mittel
- 61: Wand
- 62: Wand
- 63: Kantung
- 64: Blende

- 70: Positionierungsantrieb

## Patentansprüche

1. Vorrichtung (1) zum Absaugen von Abfallprodukten (2) einer Produktionsmaschine (3), welche als Endlosstreifen ausgebildet sind, mit
einer Saugkammer (10), an der mindestens ein Absaugelement (20) angeordnet ist, das in einen außerhalb der Saugkammer (10) sich befindenden Absaugraum (4) sich erstreckt, um Abfallprodukte (2) in die Saugkammer (10) zu befördern,
wobei das Absaugelement (20) einen Einlassbereich (24), der dem Absaugraum (4) zugewandt ist, und einen Auslassbereich (28) aufweist, der in die Saugkammer (10) mündet, wobei das Absaugelement (20) eine umlaufende Wandung (30) aufweist, die mit einem derart gekrümmten Verlauf ausgebildet ist, dass während der Absaugung im Auslassbereich (28) beabstandet zu der Wandung (30) eine mittlere Unterdruckzone (51) sich ergibt, die einen geringeren Unterdruck aufweist als der Unterdruck, der in einer äußeren Unterdruckzone (52) zwischen der mittleren Unterdruckzone (51) und der Wandung (30) entsteht, wodurch die Abfallprodukte (2) innerhalb des Absaugelements (20) im wesentlichen mittig hindurchströmen und eine Kontaktierung der Abfallprodukte (2) an der Wandung (30) minimierbar ist, **dadurch gekennzeichnet, dass** die Wandung (30) des Absaugelements (20) eine innere Wandung (31) und eine äußere Wandung (32) aufweist, wobei die innere Wandung (31) tangential am Auslassbereich (28) an der Saugkammer (10) endet, und
die äußere Wandung (32) ein Mittel (60) aufweist, das einen Strömungswiderstand innerhalb des Absaugelementes (20) erhöht, wodurch am Auslassbereich (28) der Unterdruck der äußeren Unterdruckzone (52) im Bereich der inneren Wandung (31) reduzierbar ist, wobei
das Mittel (60) derart ins Innere des Absaugelementes (20) hineinragt,
dass der Querschnitt des Absaugelementes (20) zwischen dem Einlassbereich (24) und dem Auslassbereich (28) sich verjüngt, wobei
das Mittel (60) als Wand (61,62) ausgeführt ist, die schräg zum Einlassbereich (24) geneigt ist.

2. Vorrichtung (1) nach Anspruch 1,
**dadurch gekennzeichnet,**
**dass** die innere Wandung (31) einen Verlauf eines Kreissegmentes aufweist, der insbesondere einen definierten Radius aufweist.

3. Vorrichtung (1) nach Anspruch 1 oder 2,
**dadurch gekennzeichnet,**
**dass** am Auslassbereich (28) die mittlere Unterdruckzone (51) durch die äußere Unterdruckzone (52) umfasst ist.

4. Vorrichtung (1) nach Anspruch 3,
**dadurch gekennzeichnet,**
**dass** das Mittel (60) an der dem Auslassbereich (28) zugewandten Seite der äußeren Wandung (32) vorgesehen ist und/oder dass ausgehend vom verjüngten Bereich zum Auslassbereich (28) der Querschnitt des Absaugelementes (20) sich wieder vergrößert.

5. Vorrichtung (1) nach einem der vorhergehenden Ansprüche,
**dadurch gekennzeichnet,**
**dass** das Mittel (60) als eine zum Innenbereich (29) des Absaugelementes (20) gewölbte Wand (62) ausgeführt ist, oder als eine plane Wand (61) ausgeführt ist, wobei die plane Wand (61, 62) eine Neigung α zum Auslassbereich (28) aufweist, die im Bereich 20°≤ α ≤ 70° liegt.

6. Vorrichtung (1) nach einem der vorhergehenden Ansprüche,
**dadurch gekennzeichnet,**
**dass** der Einlassbereich (24) und/oder der Auslassbereich (28) des Absaugelementes (20) einen runden Querschnitt und/oder einen rechteckigen und/oder einen quadratischen Querschnitt aufweist.

7. Vorrichtung (1) nach einem der vorhergehenden Ansprüche,
**dadurch gekennzeichnet,**
**dass** das Absaugelement (20) zwischen dem Einlassbereich (24) und dem Auslassbereich (28) mit einem Rohr (21) ausgebildet ist, wobei insbesondere das Rohr (21) einen runden Querschnitt und/oder einen rechteckigen und/oder einen quadratischen Querschnitt aufweist.

8. Vorrichtung (1) nach einem der vorhergehenden Ansprüche,
**dadurch gekennzeichnet,**
**dass** das Absaugelement (20) ein Biegeteil aus Metall ist, wobei insbesondere das Biegeteil aus vier Metallstreifenelementen (20a, 20b, 20c, 20d) ausgebildet ist, die miteinander befestigt sind.

9. Vorrichtung (1) nach einem der vorhergehenden Ansprüche,
**dadurch gekennzeichnet,**
**dass** der Einlassbereich (24) einen zum Absaugraum (4) erweiternden Querschnitt aufweist, der insbesondere trichterförmig ist.

10. Vorrichtung (1) nach einem der vorhergehenden Ansprüche,
**dadurch gekennzeichnet,**
**dass** ein Abdichtmittel (40) an der Saugkammer (10) angeordnet ist und die Saugkammer (10) verschließt, wobei insbesondere das Absaugelement (20) mit seinem Auslassbereich (28) durch das Abdichtmittel (40) sich ersteckt.

11. Vorrichtung (1) nach einem der vorhergehenden Ansprüche,
**dadurch gekennzeichnet,**
**dass** das Absaugelement (20) einen Fuß (22) aufweist, der unterhalb des Abdichtmittels (40) angeordnet ist und/oder dass das Absaugelement (20) entlang des Abdichtmittels (40) bewegbar ist, wodurch die Position des Absaugelements (20) an der Saugkammer (10) variabel einstellbar ist.

12. Produktionsmaschine (3) mit einer Vorrichtung (1) zum Absaugen von Abfallprodukten (2), welche als Endlosstreifen ausgebildet sind, gemäß einem der vorhergehenden Ansprüche 1 bis 11.

13. Produktionsmaschine (3) nach dem Anspruch 12, **dadurch gekennzeichnet,**
**dass** ein Positionierungsantrieb (70) vorgesehen ist, der eine horizontale und/oder eine vertikale Verschiebung der Vorrichtung (1) an der Produktionsmaschine (3) ermöglicht.

## Claims

1. A device (1) for suctioning off waste products (2) from a production machine (3), which are designed as continuous strips, having a suction chamber (10) on which at least one suction element (20) is arranged, which extends into a suction space (4) located outside the suction chamber (10), in order to convey waste products (2) into the suction chamber (10), wherein the suction element (20) has an inlet zone (24) that faces the suction chamber (4), and an outlet zone (28) that opens into the suction chamber (10), wherein the suction element (20) has a circumferential wall (30) that is designed with a curved course in such a manner that a central negative-pressure region (51) arises in the outlet zone (28), spaced apart from the wall (30), during the suctioning process, which has a lower negative pressure than the negative pressure, which is produced in an outer negative-pressure region (52) between the central negative-pressure region (51) and the wall (30), whereby the waste products (2) flow within the suction element (20) substantially through the middle and a contact of the waste products (2) with the wall (30) can be minimized, **characterized in that** the wall (30) of the suction element (20) has an inner wall (31) and an outer wall (32), wherein the inner wall (3) ends tangentially on the outlet zone (28) of the suction chamber (10), and the outer wall (32) has a means (60), which increases a flow resistance within the suction element (20), whereby at the outlet zone (28) the negative pressure of the outer negative-pressure region (52) can be reduced in the area of the inner wall (31), wherein the means (60) protrudes into the interior of the suction element (20) in such a manner that the cross section of the suction element (20) tapers between the inlet zone (24) and the outlet zone (28), wherein the means (60) is designed as wall (61, 62), which is inclined obliquely to the inlet zone (24).

2. The device (1) according to Claim 1,
**characterized in**
**that** the inner wall (31) has a course of a circular segment, which has in particular a defined radius.

3. The device (1) according to Claim 1 or 2,
**characterized in**
**that** at the outlet zone (28) the central negative-pressure region (51) is comprised by the outer negative-pressure region (52).

4. The device (1) according to Claim 3,
**characterized in**
**that** the means (60) is provided on the side of the outer wall (32) facing the outlet region (28) and/or that proceeding from the tapered area to the outlet zone (28) the cross section of the suction element (20) is increased again.

5. The device (1) according to any one of the preceding claims,
**characterized in**
**that** the means (60) is designed as a wall curved towards the inner region (29) of the suction element (20), or is designed as a plane wall (61), wherein the plane wall (61, 62) has an inclination α towards the outlet zone (28), which is in the range of 20°≤ α ≤70°.

6. The device (1) according to any one of the preceding claims,
**characterized in**
**that** the inlet zone (24) and/or the outlet zone (28) of the suction element (20) has a round cross section and/or a rectangular and/or a square cross section.

7. The device (1) according to any one of the preceding claims,
**characterized in**
**that** the suction element (20) is formed between the inlet zone (24) and the outlet zone (28) with a tube (21), wherein, in particular the tube (21) has a round cross section and/or a rectangular and/or a square cross section.

8. The device (1) according to any one of the preceding claims,
**characterized in**
**that** the suction element (20) is a bent part made of metal, wherein, in particular, the bent part is formed from four metal strip elements (20a, 20b, 20c, 20d), which are fastened to each other.

9. The device (1) according to any one of the preceding claims,
**characterized in**
**that** the inlet zone (24) has a cross section which widens towards the suction chamber (4), which is in particular, funnel-shaped.

10. The device (1) according to any one of the preceding claims,
**characterized in**
**that** a sealing means (40) is arranged on the suction chamber (10) and seals the suction chamber (10), wherein, in particular, the suction element (20) with its outlet zone (28) extends through the sealing means (40).

11. The device (1) according to any one of the preceding claims,
**characterized in**
**that** the suction element (20) has a base (22), which is arranged underneath the sealing means (40) and/or that the suction element (20) can be moved along the sealing means (40), whereby the position of the suction element (20) on the suction chamber (10) can be variably adjustable.

12. A production machine (3) with a device (1) for suctioning off waste products (2), which are designed as continuous strips, according to any one of the preceding Claims 1 to 11.

13. A production machine (3) according to Claim 12,
**characterized in**
**that** a positioning drive (70) is provided, which makes possible a horizontal and/or a vertical displacement of the device (1) on the production machine (3).

## Revendications

1. Dispositif (1) pour l'aspiration de produits de rebut (2) d'une machine de production (3), qui sont conçus comme une bande sans fin, avec
une chambre d'aspiration (10) au niveau de laquelle est disposé au moins un élément d'aspiration (20), qui s'étend dans un espace d'aspiration (4) se trouvant à l'extérieur de la chambre d'aspiration (10), afin de convoyer les produits de rebut (2) vers la chambre d'aspiration (10),
l'élément d'aspiration (20) comprenant une zone d'entrée (24), qui est orientée vers l'espace d'aspiration (4), et une zone de sortie (28) qui débouche dans la chambre d'aspiration (10),
l'élément d'aspiration (20) comprenant une paroi périphérique (30) qui est conçu avec un contour incurvé de façon à ce que, pendant l'aspiration, dans la zone de sortie (28), à une certaine distance de la paroi (30), il en résulte une zone de dépression centrale (51) qui présente une dépression plus faible que la dépression qui apparaît dans une zone de dépression externe (52) entre la zone de dépression centrale (51) et la paroi (30), ce qui fait en sorte que les produits de rebut (2) passent à l'intérieur de l'élément d'aspiration (20) globalement au centre et qu'un contact des produits de rebut (2) avec la paroi (30) peut être minimisé, **caractérisé en ce que**
la paroi (30) de l'élément d'aspiration (20) comprend une paroi interne (31) et une paroi externe (32), la paroi interne (31) se terminant tangentiellement au niveau de la zone de sortie (28) sur la chambre d'aspiration (10) et
la paroi externe (32) comprend un moyen (60) qui augmente une résistance à l'écoulement à l'intérieur de l'élément d'aspiration (20), ce qui fait en sorte que, au niveau de la zone de sortie (28), la dépression de la zone de dépression externe (52) peut être réduite au niveau de la paroi interne (31),
le moyen (60) dépassant à l'intérieur de l'élément d'aspiration (20) de façon à ce que la section transversale de l'élément d'aspiration (20) se rétrécisse entre la zone d'entrée (24) et la zone de sortie (28),
le moyen (60) étant conçu comme une paroi (61, 62) qui est inclinée de manière oblique par rapport à la zone d'entrée (24).

2. Dispositif (1) selon la revendication 1,
**caractérisé en ce que**
la paroi interne (31) présente le contour d'un segment circulaire qui présente plus particulièrement un rayon défini.

3. Dispositif (1) selon la revendication 1 ou 2,
**caractérisé en ce que**
au niveau de la zone de sortie (28), la zone de dépression centrale (51) est entourée par la zone de dépression externe (52).

4. Dispositif (1) selon la revendication 3,
**caractérisé en ce que**
le moyen (60) est prévu sur le côté de la paroi externe (32) orienté vers la zone de sortie (28) et/ou **en ce que**, de la zone rétrécie vers la zone de sortie (28), la section transversale de l'élément d'aspiration (20) augmente à nouveau.

5. Dispositif (1) selon l'une des revendications précédentes,
**caractérisé en ce que**
le moyen (60) est conçu comme une paroi (62) voûtée vers la partie interne (29) de l'élément d'aspiration (20) ou comme une paroi plane (61), la paroi plane (61, 62) présentant une inclinaison α par rapport à la zone de sortie (28), qui est 20° ≤ α ≤ 70°.

6. Dispositif (1) selon l'une des revendications précédentes,
**caractérisé en ce que**
la zone d'entrée (24) et/ou la zone de sortie (28) de l'élément d'aspiration (20) présente une section transversale ronde et/ou une section transversale rectangulaire et/ou une section transversale carrée.

7. Dispositif (1) selon l'une des revendications précédentes,
**caractérisé en ce que**
l'élément d'aspiration (20) est réalisé, entre la zone d'entrée (24) et la zone de sortie (28), avec un tube (21), plus particulièrement le tube (21) présentant une section transversale ronde et/ou une section transversale rectangulaire et/ou une section transversale carrée.

8. Dispositif (1) selon l'une des revendications précédentes,
**caractérisé en ce que**
l'élément d'aspiration (20) est une pièce métallique pliée, plus particulièrement la pièce pliée étant constituée de quatre éléments de bandes métalliques (20a, 20b, 20c, 20d), qui sont fixés entre eux.

9. Dispositif (1) selon l'une des revendications précédentes,
**caractérisé en ce que**
la zone d'entrée (24) présente une section transversale s'élargissant vers l'espace d'aspiration (4), qui est plus particulièrement en forme d'entonnoir.

10. Dispositif (1) selon l'une des revendications précédentes,
**caractérisé en ce que**
un moyen d'étanchéification (40) est disposé sur la chambre d'aspiration (10) et ferme la chambre d'aspiration (10), plus particulièrement l'élément d'aspiration (20) s'étendant, avec sa zone de sortie (28), à travers le moyen d'étanchéification (40).

11. Dispositif (1) selon l'une des revendications précédentes,
**caractérisé en ce que**
l'élément d'aspiration (20) comprend un pied (22) qui est disposé en dessous du moyen d'étanchéification (40) et/ou **en ce que** l'élément d'aspiration (20) est mobile le long du moyen d'étanchéification (40), ce qui permet de réglé la position de l'élément d'aspiration (20) de manière variable au niveau de la chambre d'aspiration (10).

12. Machine de production (3) avec un dispositif (1) pour l'aspiration de produits de rebut (2), qui sont conçus comme des bandes sans fin, selon l'une des revendications précédentes 1 à 11.

13. Machine de production (3) selon la revendication 12,
**caractérisée en ce que**
un entraînement de positionnement (70) est prévu, qui permet un déplacement horizontal et/ou vertical du dispositif (1) sur la machine de production (3).
